# EUROPEAN PATENT SPECIFICATION

(11) **EP 1 895 389 B1**
(45) Date of publication and mention of the grant of the patent: **24.02.2010**
(21) Application number: 07115126.0
(22) Date of filing: 28.08.2007
(51) Int. Cl.: G06F 3/01, G06F 3/048

(54) **Method for dynamically adapting button size on touch screens to compensate for hand tremor**
Verfahren zur dynamischen Anpassung der Größe von Schaltflächen auf einem Touchscreen aufgrund eines Handtremors
Procédé pour l'adaptation dynamique de la taille des touches sur des écrans tactiles pour compenser le tremblement des mains

(30) Priority: 31.08.2006 US 513477
(43) Date of publication of application: 05.03.2008
(73) Proprietor: Honeywell International Inc., Morristown NJ 07960 (US)
(72) Inventor: Plocher, Thomas A., Hugo, MN 55038 (US)
(74) Representative: Skone James, Robert Edmund

(56) References cited:
- US-A- 6 160 701
- LEVINE J L ET AL: "A MOUSE ADAPTER FOR PEOPLE WITH HAND TREMOR" IBM SYSTEMS JOURNAL, IBM CORP. ARMONK, NEW YORK, US, vol. 44, no. 3, 1 January 2005 (2005-01-01), pages 621-628, XP001542750 ISSN: 0018-8670

## Description

### FIELD OF THE INVENTION

The invention relates generally to touch screen interfaces. In particular, this invention relates to dynamically adapting the size of touch sensitive areas on touch screens in response to the motor skill level of the user.

### BACKGROUND OF THE INVENTION

Touch screens are widely used in applications such as information kiosk displays, ATM's and home systems for environmental control, security and health care. Touch screens enable users to touch a touch sensitive area or "button" on an application interface screen, and by the touching of the button, select an option toward obtaining an objective, such as a withdrawal from an ATM or a temperature setting on a thermostat. Often, based on the user's selected option, another touch screen with additional choices or options is displayed, and the user makes another selection by again touching the screen. This selection process continues until the user's selection from the screen produces the desired objective, such as obtaining money from the ATM. Traditionally, touch screens are designed having a fixed format, including specific buttons of explicit, pre-determined sizes in fixed locations on the screen.

Incorporating touch screens into products is becoming more widespread due to touch screen intuitiveness and ease of operation. However, to achieve these benefits, it is critical that the buttons be large enough to permit accurate touching on the first attempt. People with hand tremors, including elderly people who frequently develop hand tremors to varying degrees as they age, can be frustrated by the need for accurate touching for correct operation of the touch screens. To date, the only way to deal with this problem has been to create fixed screen designs in which all the buttons are suitably large for any impaired user. However, large buttons result in fewer options being placed on a single screen, necessitating multiple screens to display all options. Having to navigate additional screens slows down the interactions of users, elderly and others, who have normal pointing and touching ability, Accordingly, a method is needed to adapt button size automatically on a case by case basis, depending on the amount of hand tremor present in the user.

"A mouse adapter for people with hand tremor" by J L Levine and M A Schappert, IBM Systems Journal, Vol 44, No 3, 2005 p. 621 (XP001542750) discloses an adapter which filters motion signals from a mouse, removing high frequency motions due to tremors, such that the computer receives an input in which the effects of hand tremors are reduced. However, such means are clearly not appropriate for touch screen systems in which there is no mouse.

### SUMMARY OF THE INVENTION

The present invention is directed to a system in which sensors are arrayed around a touch screen to sense small changes in hand position as a user points at a target or button on the touch screen. The sensed hand position information is passed to a filter which separates the component of the motion due to hand tremor from the intentional motion component. This information about the extent of the hand tremor can be used either to dynamically increase the size of a button as the user's hand is in motion, or to retrieve and display a fixed screen layout with appropriately large buttons. As a simple analogy with respect to dynamically increasing button size, this is like the baseball player who wishes his glove were just an inch longer at that moment a split second before he misses the ball. Thus, in this inventive system, the button size is always perfectly adapted to the steadiness or eye-hand coordination level of the particular user.

### BRIEF DESCRIPTION OF THE DRAWINGS

The objects, features and advantages of the invention are understood within the context of the Description of the Preferred Embodiments, as set forth below. The Description of the Preferred Embodiments is understood within the context of the accompanying drawings, which form a material part of this disclosure, wherein:

Figure 1 illustrates a schematic of a first embodiment of the invention;

Figure 2 illustrates a schematic of a second embodiment of the invention;

Figures 3a-3c illustrate examples of touch screens of the first embodiment of the invention; and

Figures 4a-4c illustrate examples of touch screens of the second embodiment of the invention.

### DESCRIPTION OF THE PREFERRED EMBODIMENTS

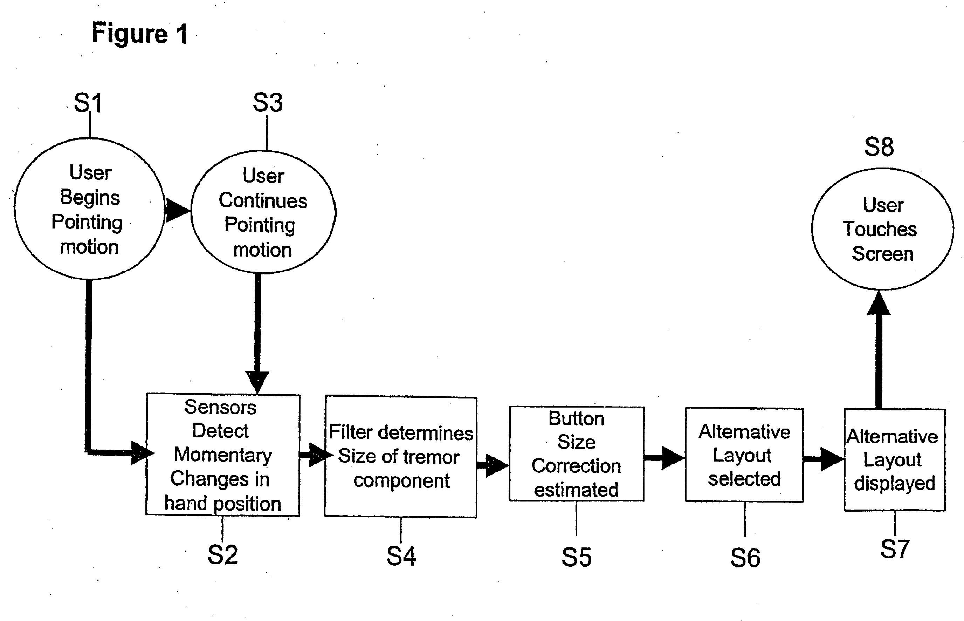

Figure 1 is a schematic diagram of a first embodiment of the present invention which is described in detail as follows. While facing a touch screen around which sensors are arrayed, a user begins pointing toward the screen (Step S 1). Capacitive sensors are one example of a sensor that has been used to sense hand position and pointing. A commercial product using capacitative sensors for such sensing is available from EtherTouch, Inc. Another example of a sensor is a video camera. Other sensors and motion detecting devices can also be used. The sensors detect small and/or momentary changes in hand position (Step S2) as the user continues his or her pointing motion toward a button or target on the touch screen (Step S3).

The sample of motion data or sensed hand position information is passed to filter software which receives the input from the sensors and filters out random motion caused by unsteadiness or tremor in the hand from the directed smooth movements that define a smooth trajectory of the hand toward the touch target on the screen. Thus the filter estimates the motion component due to tremor along with the intentional pointing component of the motion by separating the component of the motion due to hand tremor from the intentional motion component (Step S4). For example, a sensor or motion detector can track the motion and/or movement a hand in three dimensions with a sampling rate of at least 10 ms, providing appropriate data which can be input to the filter software.

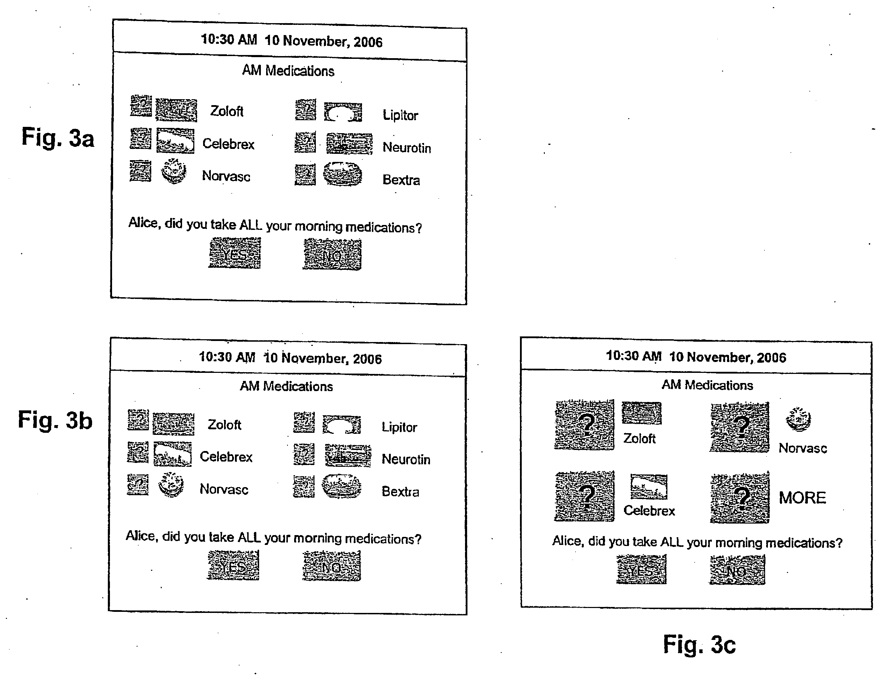

Next, using software which receives data from the filter, a button size correction is estimated (Step S5). A new button size is determined based on the correction estimated and an alternate fixed screen format containing buttons which encompass the new button size is selected (Step S6). The inventor has co-authored a study exploring and determining optimal button size is "Touch Screen User Interfaces for Older Adults: Button Size and Spacing", The selected alternate screen format is displayed on the touch screen (Step S7), as shown in Figure 3c, described in detail below. The user touches the screen (Step S8) and the selected screen option is implemented.

In an enhancement of this embodiment, the tremor information can be used as a test sample to simply select, post hoc, a suitable layout of buttons from a set of prepared layout options. The selected layout then becomes the default layout or default screen format for this particular user.

In another enhancement, a user attempts to touch the screen more than once before the layout is altered. These initial pointing/touching attempts by the user can be considered test trials for the purpose of selecting an appropriate screen layout which would be used for that person thereafter. The number of initial pointing attempts could be as few as one or more.

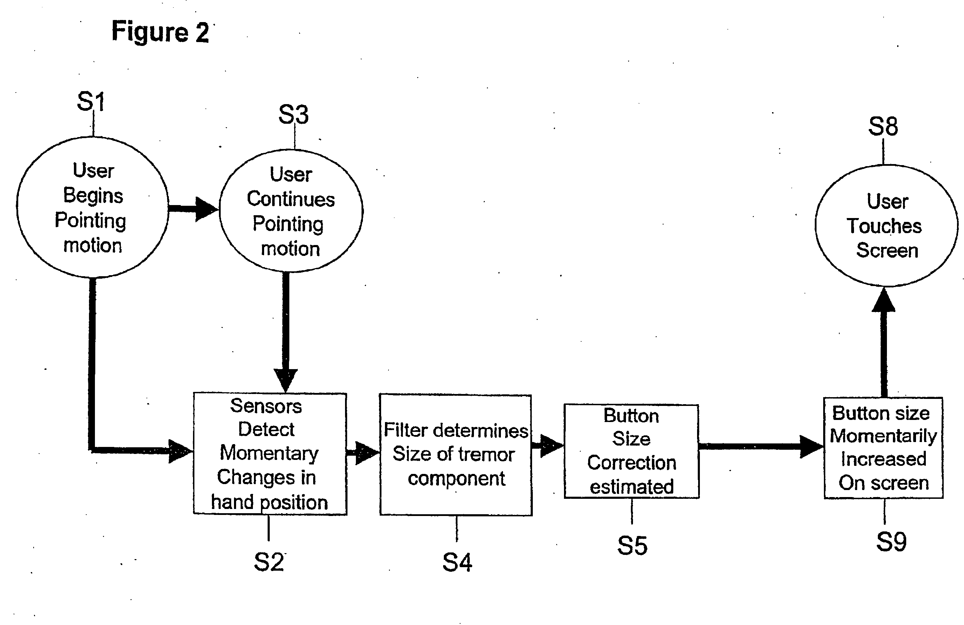

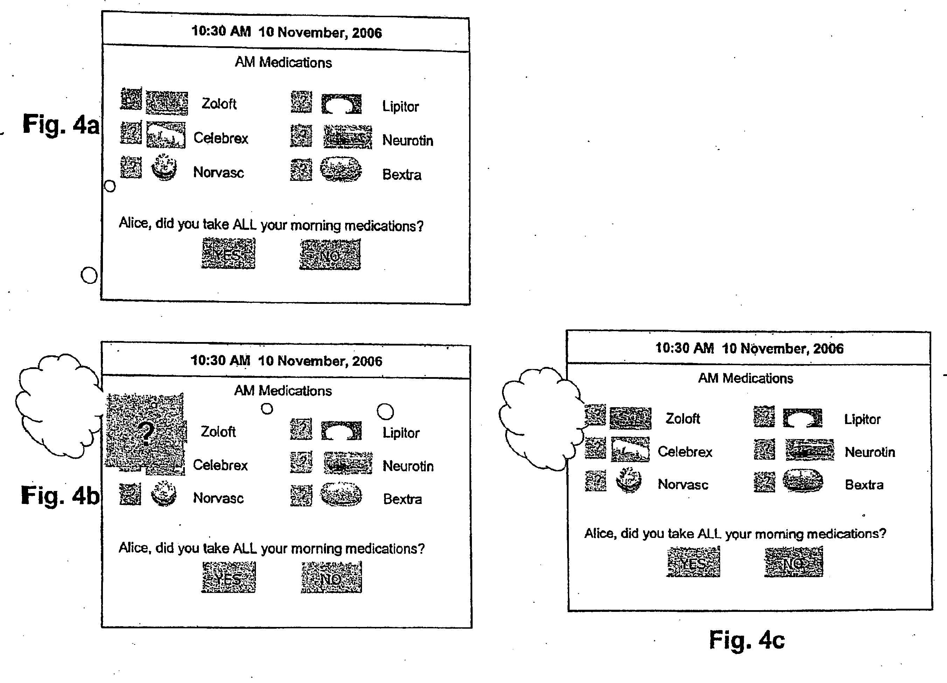

In a second embodiment of the invention, schematically illustrated in Figure 2, steps S1-S5 are performed as in the first embodiment. Since these steps are the same, they will not be described a second time. In step S9, information about the extent of the hand tremor can be used more dynamically than in the previous embodiment such that the size of the button is momentarily increased as the user's hand is in motion and about to touch it (or just miss it). Thus the tremor information can be used dynamically to estimate a tailor-made button size for this user. The tremor size, for example calculated in X and Y dimensions, is added to the default button size to increase its size appropriately. Accordingly, the button is made larger on the screen just prior to the user contacting it, creating a "basket" or "catching" his or her finger, so to speak. An example of this is shown in Figure 4b which is described in more detail below. As in the first embodiment, the user touches the screen (Step S8) and the selected screen option is implemented.

An example of the first embodiment is shown in Figures 3a-3c. Figure 3a shows a touch screen having eight "buttons", one for each of six medications, and a YES button and a NO button. The screen displays the buttons along with the question "Alice, did you take ALL your morning medications?" Assume Alice desires to touch the Zoloft button, that is, the "?" to the left of the text "Zoloft". Figure 3b shows the touch screen as the user begins to point to this Zoloft "?" button, as described in step S3 above. Figure 3c shows the touch screen after the inventive system estimates the button size correction and arranges the screen in a new layout with larger buttons, whose size is calculated from the user's motion (step S7). Once Alice successfully touches a button, the button sizes can revert to their original sizes, shown in Figure 3a.

An example of the second embodiment is shown in Figures 4a-4c. As with the first embodiment, Figure 4a shows a touch screen having eight buttons, one for each of six medications and a YES button and a NO button. The screen displays the buttons with the question "Alice, did you take ALL your morning medications?" Assume that Alice desires to touch the Zoloft button. As the user's finger begins to point to and touch this "Zoloft" button, Figure 4b shows the "?" button corresponding to "Zoloft" increasing in size, enabling the user to touch this button (Step S9). As in the first embodiment, the modified button size is calculated from the user's motion. However, in this embodiment, only the desired button is changed in size. As above, once the user successfully touches a button, the button sizes can revert to their original sizes, shown in Figure 4c.

While it is apparent that the invention herein disclosed is well calculated to fulfill the objects stated above, it will be appreciated that numerous modifications and embodiments may be devised by those skilled in the art.

## Claims

1. An article of manufacture having one or more sensors arrayed around a touch screen having at least one touch sensitive area, said article comprising:
a computer usable medium having a computer readable program code for operating on a computer for dynamically adapting the size of touch sensitive areas in response to the motor skill level of the user, the computer readable program code in said article of manufacture comprising:
computer readable program code to receive hand position data (S2) generated as the user attempts to touch the touch sensitive area, the hand position data from the one or more sensors said code separating a component of the motion due to hand tremor of said hand position data from an intentional component of said hand position data (S4);
computer readable program code to calculate an amended touch sensitive area size (S5) based on the component of the motion due to hand tremor of said hand position data; and
computer readable program code to select and display the amended touch sensitive area on the touch screen (S6, S7).

2. An article of manufacture as claimed in claim 1, wherein the selected revised touch sensitive area becomes the default touch sensitive area for the user.

3. An article of manufacture as claimed in claim 1, wherein the selected revised touch sensitive area is selected from a set of prepared layout options.

4. An article of manufacture as claimed in claim 1, wherein the attempts to touch the touch sensitive area is greater than one and the amended touch sensitive area is determined by combining the attempts.

5. An article of manufacture as claimed in claim 1, wherein the amended touch sensitive area is momentarily displayed on the touch screen (S9).

## Patentansprüche

1. Herstellungsartikel mit einem oder mehreren Sensoren, die um einen Berührungsschirm mit mindestens einem berührungsempfindlichen Bereich herum gruppiert sind, wobei der Artikel Folgendes umfasst:
ein computerbenutzbares Medium mit einem computerlesbaren Programmcode zum Betrieb auf einem Computer zur dynamischen Anpassung der Größe von berührungsempfindlichen Bereichen als Reaktion auf den motorischen Geschicklichkeitsgrad des Benutzers, wobei der computerlesbare Programmcode in dem Herstellungsartikel Folgendes umfasst:
computerlesbaren Programmcode zum Empfangen von Handpositionsdaten (S2), die erzeugt werden, während der Benutzer versucht, den berührungsempfindlichen Bereich zu berühren, wobei die Handpositionsdaten aus dem einen bzw. den mehreren Sensoren stammen, wobei der Code eine Komponente der Bewegung aufgrund von Handzittern der Handpositionsdaten von einer beabsichtigten Komponente der Handpositionsdaten trennt (S4);
computerlesbaren Programmcode zum Berechnen einer modifizierten Größe des berührungsempfindlichen Bereichs (S5) auf der Basis der Komponente der Bewegung aufgrund von Handzittern der Handpositionsdaten; und
computerlesbaren Programmcode zum Auswählen und Anzeigen des modifizierten berührungsempfindlichen Bereichs auf dem Berührungsschirm (S6, S7).

2. Herstellungsartikel nach Anspruch 1, wobei der gewählte revidierte berührungsempfindliche Bereich zu dem vorgegebenen berührungsempfindlichen Bereich für den Benutzer wird.

3. Herstellungsartikel nach Anspruch 1, wobei der gewählte revidierte berührungsempfindliche Bereich aus einer Menge vorbereiteter Layoutoptionen ausgewählt wird.

4. Herstellungsartikel nach Anspruch 1, wobei die Versuchszahl, den berührungsempfindlichen Bereich zu berühren, größer als eins ist und der modifizierte berührungsempfindliche Bereich durch Kombinieren der Versuche bestimmt wird.

5. Herstellungsartikel nach Anspruch 1, wobei der modifizierte berührungsempfindliche Bereich für einen Moment auf dem Berührungsschirm angezeigt wird (S9).

## Revendications

1. Article de fabrication dont un ou plusieurs capteurs sont regroupés autour d'un écran tactile doté d'au moins une zone sensible au toucher, ledit article comprenant :
un support utilisable par ordinateur comportant un code-programme lisible par ordinateur destiné à tourner sur un ordinateur afin d'adapter de façon dynamique la taille des zones sensibles au toucher en réaction au niveau des compétences motrices d'un utilisateur, le code-programme lisible par ordinateur dans ledit article de fabrication comportant :
un code-programme lisible par ordinateur afin de recevoir des données (S2) de la position des mains ayant été générées au moment où l'utilisateur tente de toucher la zone sensible au toucher, les données de la position des mains provenant dudit capteur ou de plusieurs desdits capteurs, ledit code séparant une composante du mouvement causé par le tremblement des mains desdites données de la position des mains à partir d'une composante intentionnelle desdites données (S4) de la position des mains ;
un code-programme lisible par ordinateur pour calculer une taille modifiée (S5) de la zone sensible au toucher, sur la base de la composante du mouvement causé par le tremblement des mains desdites données de la position des mains ; et
un code-programme lisible par ordinateur pour sélectionner et afficher la zone modifiée sensible au toucher sur l'écran tactile (S6, S7).

2. Article de fabrication selon la revendication 1, la zone révisée sensible au toucher qui a été sélectionnée devenant la zone sensible au toucher par défaut pour l'utilisateur.

3. Article de fabrication selon la revendication 1, la zone révisée sensible au toucher qui a été sélectionnée étant choisie parmi un ensemble d'options de configuration préparées.

4. Article de fabrication selon la revendication 1, les tentatives visant à toucher la zone sensible au toucher étant supérieures à l'unité, et la zone modifiée sensible au toucher étant déterminée grâce à la combinaison des tentatives.

5. Article de fabrication selon la revendication 1, la zone modifiée sensible au toucher étant momentanément affichée sur l'écran tactile (S9).
